# EUROPÄISCHE PATENTSCHRIFT

(11) **EP 3 005 292 B1**
(45) Veröffentlichungstag und Bekanntmachung des Hinweises auf die Patenterteilung: **02.01.2019**
(21) Anmeldenummer: 14729213.0
(22) Anmeldetag: 02.06.2014
(51) Int. Cl.: G06T 7/579

(54) **3D-AUFNAHMEVORRICHTUNG, VERFAHREN ZUR ERSTELLUNG EINES 3D-BILDES UND VERFAHREN ZUR EINRICHTUNG EINER 3D-AUFNAHMEVORRICHTUNG**
3D RECORDING DEVICE, METHOD FOR PRODUCING A 3D IMAGE, AND METHOD FOR SETTING UP A 3D RECORDING DEVICE
DISPOSITIF DE PRISES DE VUES 3D, PROCÉDÉ POUR RÉALISER UNE IMAGE 3D ET PROCÉDÉ POUR AMÉNAGER UN DISPOSITIF DE PRISES DE VUES 3D

(30) Priorität: 04.06.2013 DE 102013009288
(43) Veröffentlichungstag der Anmeldung: 13.04.2016
(73) Patentinhaber: Testo SE & Co. KGaA, 79853 Lenzkirch (DE)
(72) Erfinder: EVERS-SENNE, Jan-Friso, 79822 Titisee-Neustadt (DE); STRATMANN, Martin, 79117 Freiburg i. Br. (DE); ZAHN, Patrick, 79822 Titisee-Neustadt (DE)
(74) Vertreter: Börjes-Pestalozza, Henrich
(86) Internationale Anmeldenummer: PCT/EP2014/001474
(87) Internationale Veröffentlichungsnummer: WO 2014/195000

(56) Entgegenhaltungen:
- MARTINEZ ET AL: "Non-contact 3D Measurement of Buildings through Close Range Photogrammetry and a Laser Distance Meter", PHOTOGRAMMETRIC ENGINEERING AND REMOTE SENSING, AMERICAN SOCIETY FOR PHOTOGRAMMETRY AND REMOTE SENSING, US, Bd. 77, Nr. 8, 1. August 2011 (2011-08-01) , Seiten 805-811, XP009179095, ISSN: 0099-1112
- ORDONEZ C ET AL: "Measuring building facades with a low-cost close-range photogrammetry system", AUTOMATION IN CONSTRUCTION, ELSEVIER SCIENCE PUBLISHERS, AMSTERDAM, NL, Bd. 19, Nr. 6, 1. Oktober 2010 (2010-10-01), Seiten 742-749, XP027160144, ISSN: 0926-5805 [gefunden am 2010-04-21]
- Anonymous: "Bundle adjustment", Wikipedia, 17 March 2013 (2013-03-17), pages 1-5, XP055380555, Retrieved from the Internet: URL:https://en.wikipedia.org/w/index.php?t itle=Bundle_adjustment&oldid=544997880 [retrieved on 2017-06-12]

## Beschreibung

Die Erfindung betrifft eine 3D-Aufnahmevorrichtung mit einer Bildaufnahmevorrichtung, einem Abstandsmessgerät und einer Bildverarbeitungsvorrichtung.

Die Erfindung betrifft weiter ein Verfahren zur Erstellung eines 3D-Bildes.

Die Erfindung betrifft schließlich ein Verfahren zur Einrichtung einer 3D-Aufnahmevorrichtung.

Es ist bekannt, mittels Musterprojektion oder Abtastung 3D-Bilder von Objekten zu erstellen. Die hierzu geeigneten 3D-Aufnahmevorrichtungen sind komplex und erfordern einen besonders geschulten Benutzer.

Aus J. Martinez et al., "Non-contact 3D Measurement of Buildings through Close Range Photogrammetry and a Laser Distance Meter", Photogrammetric Engineering and Remote Sensing, Vol. 77, No. 8, 1. August 2011, pp. 805-811, ist ein berührungsloses 3D-Messverfahren für Gebäude bekannt, wobei ein Laser-Abstandsmessgerät mit einer Digitalkamera über zwei rotierende Scheiben zur Änderung der Orientierung des Laser-Abstandmessgeräts in Bezug auf die optische Achse der Digitalkamera gekoppelt ist, wobei das System nach einem Triangulationsprinzip einen Abstand zwischen einem optischen Zentrum und einem Laser-Messfleck des Abstandsmessgeräts aus einem vom Abstandsmessgerät gemessenen Abstand und einer Orientierung des Abstandsmessgeräts zur Kamera berechnet.

Aus C. Ordonez et al., "Measuring building facades with a low-cost close-range photogrammetry system", Automation in Construction 19 (1. Oktober 2010), 742-749, ist ein System aus einer Digitalkamera und einem Laser-Abstandsmessgerät, welches auf einem Träger derart montiert ist, dass das Laser-Abstandsmessgerät unabhängig von der Kamera bewegt werden kann, bekannt.
Die Erfindung hat sich zum Ziel gestellt, ein vereinfachtes Verfahren zur Erstellung eines näherungsweisen 3D-Bildes bereitzustellen.
Zur Lösung dieser Aufgabe werden erfindungsgemäß die Merkmale von Anspruch 1 vorgeschlagen. Insbesondere wird somit bei einer 3D-Aufnahmevorrichtung der eingangs beschriebenen Art vorgeschlagen, dass die Bildverarbeitungsvorrichtung zur Identifikation wenigstens einer Gruppe von zueinander korrespondierenden Bildbestandteilen in einer Folge von wenigstens zwei mit der Bildaufnahmevorrichtung aufgenommenen Bildern eingerichtet ist, dass die Bildverarbeitungsvorrichtung zur Berechnung wenigstens einer dreidimensionalen Positionsangabe zu (es folgen die ursprünglichen Seiten 2 bis 31 der Beschreibung)
der wenigstens einen Gruppe von zueinander korrespondierenden Bildbestandteilen aus einer jeweiligen Bildposition der Bildbestandteile aus der Gruppe in den Bildern der Folge eingerichtet ist und dass die Bildverarbeitungsvorrichtung zur Skalierung der berechneten wenigstens einen dreidimensionalen Positionsangabe mittels einer mit dem Abstandsmessgerät gemessenen Abstandsinformation eingerichtet ist. Von Vorteil ist dabei, dass die Konstruktion eines 3D-Bildes aus einer Folge von aufgenommenen Bildern, beispielsweise Frames einer Videosequenz, anhand der Bildpositionen von identifizierten Bildbestandteilen der Bilder, die zueinander korrespondieren, ermöglicht ist. Hieraus sind dreidimensionale Positionsangaben der identifizierten Bildbestandteile berechenbar, welche mit einer Abstandsinformation oder wenigen Abstandsinformationen auf das tatsächliche Maß skalierbar sind. Es sind so tatsächliche Längen, Flächeninhalte und/oder Rauminhalte gewinnbar. Von Vorteil ist dabei, dass nur wenige Abstandsinformationen, beispielsweise eine einzige Abstandsinformation oder weniger als zehn Abstandsinformationen oder weniger als halb so viele Abstandsinformationen, wie Gruppen von zueinander korrespondierenden Bildbestandteilen identifiziert wurden, gemessen werden müssen. Dies vereinfacht die Anforderungen an das verwendbare Abstandsmessgerät beträchtlich, wodurch sich die Bedienung vereinfacht.

Als korrespondierende Bildbestandteile werden somit Bildbestandteile in den Bildern bezeichnet, die aufgrund übereinstimmender oder ähnlicher Merkmale oder auf sonstige Weise inhaltlich zueinander korrespondieren.

Bevorzugt ist das Abstandsmessgerät zur Messung eines Abstands entlang einer beispielsweise linien- oder strahlenförmig verlaufenden Messrichtung eingerichtet. Beispielsweise kann die Messrichtung durch einen von dem Abstandsmessgerät erzeugten Messstrahl gegeben sein.

Das Abstandsmessgerät kann somit zur punktförmigen Abstandsmessung eingerichtet sein.

Das Abstandsmessgerät kann auf unterschiedlichen Messprinzipien beruhen. Eine Laserdistanzmessung ist beispielsweise möglich, wenn das Abstandsmessgerät als Laser-Abstandsmessgerät ausgebildet ist. Hierbei kann das Abstandsmessgerät einen Laser-Messstrahl als Messstrahl generieren, mit welchem ein Abstand messbar ist. Es sind auch Ultraschallmessungen der Abstandsinformation ausführbar.

Es kann vorgesehen sein, dass eine Ausgabeeinheit zur Ausgabe der wenigstens einen skalierten dreidimensiona¬len Positions¬angabe ausgebildet ist. Somit ist eine Skalierungsinformation eines erstellten 3D-Bildes bereitstellbar und/oder weiterverarbeitbar.

Bei einer Ausgestaltung der Erfindung kann vorgesehen sein, dass die Bildverarbeitungsvorrichtung zur Berechnung einer Aufnahmepose der Bildaufnahmevorrichtung aus den jeweiligen Bildpositionen der Bildbestandteile der wenigstens einen Gruppe eingerichtet ist. Von Vorteil ist dabei, dass Rückschlüsse auf die Aufnahmebedingungen gewinnbar sind. Von Vorteil ist weiter, dass eine gemessene Abstandsinformation auf einen Aufnahmestandort beziehbar ist.

Bei einer Ausgestaltung der Erfindung kann vorgesehen sein, dass die Bildverarbeitungsvorrichtung zur Berechnung weiterer dreidimensionaler Positionsangaben aus den berechneten dreidimensionalen Positionsangaben und Aufnahmeposen eingerichtet ist. Von Vorteil ist dabei, dass zusätzliche Stützstellen für ein verfeinertes 3D-Bild ermittelbar sind. Beispielsweise kann die Bildverarbeitungsvorrichtung zu Berechnung in einem Stereoverfahren und/oder aus einer mit einer Level-Set-Methode berechneten Grenzfläche eingerichtet sein.
Die Identifikation von Gruppen von korrespondierenden Bildbestandteilen kann daher beispielsweise dadurch erfolgen, dass zunächst ein Bildbestandteil in einem Bild identifiziert wird und dass in weiteren Bildern nach Bildbestandteilen gesucht wird, die inhaltlich zu dem identifizierten Bildbestandteil korrespondieren.

Bevorzugt werden mehrere, beispielsweise mehr als 10 oder mehr als 50 oder sogar mehr als 100 Gruppen von korrespondierenden Bildbestandteilen identifiziert. Aus den Bildpositionen der Bildbestandteile aus diesen Gruppen in den jeweiligen, einzelnen Bildern ist ein Gleichungssystem aufstellbar, welches die einzelnen Bilder als Projektionen einer dreidimensionalen Anordnung der Bildbestandteile im Raum beschreibt. Diese dreidimensionale Anordnung stellt eine brauchbare Näherung der aufgenommenen Szene dar. Die Bildverarbeitungsvorrichtung kann hierbei zur Auflösung dieses Gleichungssystems eingerichtet sein, um zu jeder Gruppe von Bildbestandteilen eine dreidimensionale Positionsangabe zu berechnen.

Besonders günstig ist es, wenn die 3D-Aufnahmevorrichtung ein Fotoapparat, eine Kamera oder ein mit einer Foto-Funktionalität ausgerüstetes Mobiltelefon, ein Tablet-PC oder dergleichen ist, welcher/welches jeweils mit einem vorzugsweise abnehmbaren Abstandsmessgerät ausgerüstet ist. Die 3D-Aufnahmevorrichtung kann auch als Wärmebildkamera ausgebildet sein.

Da die Erfindung mit einer geringen Zahl von Abstandsinformationsmessungen, beispielsweise einer einzigen Messung einer Abstandsinformation, auskommt, sind Abstandsmessgeräte verwendbar, die nur geringe Anforderungen erfüllen.

Es ist sogar möglich, eine vorhandene Bildaufnahmevorrichtung, beispielsweise eine Kamera oder ein Foto-Handy, ein Smartphone, Tablet-PC oder eine Wärmebildkamera, mit einem beispielsweise aufklipsbaren oder ansteckbaren oder in sonstiger Weise vorzugsweise lösbar verbindbaren Abstandsmessgerät auszurüsten, um eine 3D-Aufnahmevorrichtung bereitzustellen, mit welcher - nach entsprechender Einrichtung der Betriebssoftware - das erfindungsgemäße Verfahren ausführbar ist.

Bei einer Ausgestaltung der Erfindung kann vorgesehen sein, dass die Bildverarbeitungsvorrichtung zur Identifikation der wenigstens einen Gruppe von zueinander korrespondierenden Bildbestandteilen mittels Merkmalsanalyse eingerichtet ist. Von Vorteil ist dabei, dass charakteristische Bildbestandteile identifizierbar sind, zu denen in den übrigen Bildern der Folge mit hoher Wahrscheinlichkeit Bildbestandteile identifizierbar sind, welche inhaltlich zueinander korrespondieren.

Bei einer Ausgestaltung der Erfindung kann vorgesehen sein, dass die Bildverarbeitungsvorrichtung zur Segmentierung der Bilder in Bildsegmente eingerichtet ist. Von Vorteil ist dabei, dass einzelne Bildbestandteile getrennt voneinander weiterverarbeitbar sind.

Bei einer Ausgestaltung der Erfindung kann vorgesehen sein, dass die Bildverarbeitungsvorrichtung zur Berechnung einer der wenigstens einen Gruppe von zueinander korrespondierenden Bildbestandteilen zugeordneten Abstandsinformation in einem Extra- und/oder Interpolationsverfahren aus der gemessenen Abstandsinformation und der dreidimensionalen Positionsangabe eingerichtet ist. Von Vorteil ist dabei, dass zusätzliche Abstandsinformationen gewinnbar sind, welche den Gruppen von Bildbestandteilen zuordenbar sind. Somit kann die Zahl der erforderlichen Messungen von Abstandsinformationen weiter reduziert werden. Hierbei können bekannte Extrapolationsverfahren und/oder Interpolationsverfahren verwendet werden.

Alternativ oder zusätzlich kann vorgesehen sein, dass die Bildverarbeitungsvorrichtung zur Berechnung von weiteren dreidimensionalen Positionsangaben in einem Extra- und/oder Interpolationsverfahren eingerichtet ist. Von Vorteil ist dabei, dass weitere Stützstellen berechenbar sind, um ein verfeinertes 3D-Bild zu generieren.

Bei einer Ausgestaltung der Erfindung kann vorgesehen sein, dass das Abstandsmessgerät zur Veränderung einer Ausrichtung einer Messrichtung und/oder eines Messstrahls eingerichtet ist. Beispielsweise kann hierzu vorgesehen sein, dass das Abstandsmessgerät in unterschiedliche Messrichtungen beweglich angeordnet ist. Alternativ oder zusätzlich kann vorgesehen sein, dass ein Strahlengang eines Messstrahls veränderbar ist, beispielsweise durch schaltbare und/oder bewegliche Spiegel oder andere optische Elemente. Somit ist ein Messpunkt für die Abstandsmessung veränderbar. Von Vorteil ist dabei, dass mit einem Abstandsmessgerät mehrere Abstandsmessungen ausführbar sind. Von Vorteil ist weiter, dass genauere Abstandsmessungen für Szenebestandteile, die identifizierten Gruppen von Bildbestandteilen entsprechen, ausführbar sind. Beispielsweise kann das Abstandsmessgerät hierbei auf Szenebestandteile ausrichtbar sein, welche jeweils einer identifizierten Gruppe von Bildbestandteilen entsprechen. Somit sind zu einzelnen oder allen identifizierten Gruppen von Bildbestandteilen Abstandsmessungen ausführbar.

Bei einer Ausgestaltung der Erfindung kann vorgesehen sein, dass eine Ansteuerungseinheit zur Ausrichtung der oder einer Messrichtung des Abstandsmessgeräts derart, dass die gemessene Abstandsinformation auf ein Bildsegment bezogen ist, ausgebildet ist. Von Vorteil ist, dass gezielt Abstandsmessungen ausführbar sind, welche jeweils einer einzelnen Gruppe von Bildbestandteilen zuordenbar sind. Dies kann durch Ausrichtung eines Messstrahls erreichbar sein.

Hierbei kann eine aktuelle Aufnahmepose berechenbar oder schätzbar sein durch zeitliche Extrapolation von zuvor berechneten Aufnahmeposen und/oder durch Auswertung eines Ausgangssignals eines Bewegungs- und/oder Beschleunigungssensors. Mit dieser neuen Aufnahmepose ist eine Ausrichtung der Messrichtung zur gezielten Gewinnung von Abstandsinformationen, beispielsweise für eine Bildbestandteil, zu dem noch keine oder noch wenige dreidimensionale Positionsangaben vorliegen, einstellbar.

Konstruktiv besonders einfache Ausgestaltungen ergeben sich, wenn das Abstandsmessgerät starr an der oder in Bezug auf die Bildaufnahmevorrichtung angeordnet sind. Zur Veränderung der Ausrichtung des Messstrahls kann eine Spiegelmechanik mit beweglichen und/oder schaltbaren Spiegeln ausgebildet sein.

Bei einer Ausgestaltung der Erfindung kann vorgesehen sein, dass das Abstandsgerät zur Erzeugung eines Messstrahls in einem von der Bildaufnahmevorrichtung detektierbaren Spektralbereich ausgebildet ist. Von Vorteil ist dabei, dass Kalibrierungsmessungen ausführbar sind, bei welchen Lichtmuster, welche von dem Abstandsmessgerät erzeugt sind, als korrespondierende Bildbestandteile einer Gruppe identifizierbar sind. Von Vorteil ist dabei, dass aus den Bildpositionen dieser Bildbestandteile eine Ausrichtung des Abstandsmessgeräts in Bezug auf eine Aufnahmerichtung der Bildaufnahmevorrichtung berechenbar ist.

Bei einer Ausgestaltung der Erfindung kann vorgesehen sein, dass ein Bewegungs- und/oder Beschleunigungssensor zur Detektion einer Bewegung der Bildaufnahmevorrichtung eingerichtet ist. Von Vorteil ist dabei, dass die Berechnung der dreidimensionalen Positionsangaben unterstützbar ist, indem aus einem Ausgangssignal des Bewegungs- und/oder Beschleunigungssensors eine Information über eine Veränderung der aufgenommenen Szene aufgrund einer Veränderung der Aufnahmepose der Bildaufnahmevorrichtung ausführbar ist. Somit ist die erforderliche Rechenkapazität in der Bildverarbeitungsvorrichtung nochmals reduzierbar. Von Vorteil ist weiter, dass für künftige Aufnahmen von Bildern zugehörige Aufnahmeposen aus bereits bereichneten Aufnahmeposen durch zeitliche Extrapolation und Integration des Ausgangssignals schätzbar oder berechenbar sind.

Bei einer Ausgestaltung der Erfindung kann vorgesehen sein, dass die Bildverarbeitungsvorrichtung zur Elimination von Ausreißern unter der wenigstens einen dreidimensionalen Positionsangabe eingerichtet ist. Von Vorteil ist dabei, dass in der Menge der berechneten dreidimensionalen Positionsangaben derartige Positionsangaben selektierbar sind, denen mit hoher Wahrscheinlichkeit eine gemessene oder berechnete Abstandsinformation zugeordnet werden kann. Von Vorteil ist weiter, dass dreidimensionale Positionsangaben, welche beispielsweise auf Rechenfehlern oder Identifikationsfehlern beruhen, eliminiert werden können. Somit ist die Güte der 3D-Bilderzeugung verbesserbar.

Bei einer Ausgestaltung der Erfindung kann vorgesehen sein, dass die Bildverarbeitungsvorrichtung zur Einpassung eines geometrischen Objekts in die wenigstens eine skalierte dreidimensionale Positionsangabe eingerichtet ist. Das geometrische Objekt kann ein ein-, zwei- oder dreidimensionaler Probekörper oder ein komplexeres Objekt sein. Beispielsweise kann die Bildverarbeitungsvorrichtung zur Einpassung einer Linie, insbesondere einer Geraden, in eine Menge von wenigstens zwei dreidimensionalen Positionsangaben eingerichtet sein. Beispielsweise kann die Bildverarbeitungsvorrichtung zur Einpassung einer Fläche, insbesondere einer Ebene, in eine Menge von wenigstens drei dreidimensionalen Positionsangaben eingerichtet sein. Von Vorteil ist dabei, dass grafische Interpolationen und/oder Ergänzungen des 3D-Bildes durchführbar sind.
Bei einer Ausgestaltung der Erfindung kann vorgesehen sein, dass die Bildverarbeitungsvorrichtung zur Berechnung wenigstens einer Länge, eines Flächeninhalts und/oder eines Rauminhalts aus den vorzugsweise skalierten dreidimensionalen Positionsangaben eingerichtet ist. Bevorzugt ist die Strecke, die Fläche und/oder der Raum, zu dem die jeweilige Größeninformation berechenbar ist, durch die berechneten dreidimensionalen Positionsangaben beschrieben. Von Vorteil ist dabei, dass reale physikalische Bezugsgrößen, beispielsweise Flächeninhalte oder Rauminhalte von abstrahlenden Objekten, für eine Weiterverarbeitung und/oder Bewertung von Messergebnissen bereitstellbar sind.
Bei einer Ausgestaltung der Erfindung kann vorgesehen sein, dass die Ausgabeeinheit zur grafischen Ausgabe der wenigstens einen Gruppe von zueinander korrespondierenden Bildbestandteilen an einem der vorzugsweise skalierten dreidimensionalen Positionsangabe entsprechenden Bildpunkt eingerichtet ist. Von Vorteil ist dabei, dass weitere zweidimensionale Abbilder, beispielsweise perspektivische Abbildungen, des berechneten 3D-Bildes bereitstellbar sind.

Zur Lösung der genannten Aufgabe werden erfindungsgemäß bei einem Verfahren zur Erstellung eines 3D-Bildes die Merkmale von Anspruch 10 vorgeschlagen. Insbesondere wird vorgeschlagen, dass mit einer Bildaufnahmevorrichtung eine Folge von wenigstens zwei Bildern einer Szene aufgenommen wird und in den aufgenommenen Bildern wenigstens eine Gruppe von zueinander korrespondierenden Bildbestandteilen identifiziert wird, dass in einer Bildverarbeitungsvorrichtung wenigstens eine dreidimensionale Positionsangabe zu der wenigstens einen Gruppe von zueinander korrespondierenden Bildbestandteilen berechnet wird, dass mit einem Abstandsmessgerät wenigstens eine Abstandsinformation zu der Szene gemessen wird und dass eine Skalierung der Positionsangabe mittels der gemessenen Abstandsinformation durchgeführt wird. Von Vorteil ist dabei, dass ein 3D-Bild mit einer möglichst geringen Zahl von Abstandsmessungen erstellbar ist. Hierzu kann die Bildverarbeitungsvorrichtung rechentechnisch derart ausgerüstet und eingerichtet sein, dass zur Berechnung der wenigstens einen dreidimensionalen Positionsangabe ein Gleichungssystem gelöst wird, welches die Bildpositionen der zueinander korrespondierenden Bildbestandteilen aus der wenigstens einen Gruppe in den einzelnen Bildern als Auftreffpunkte von Projektionen beschreibt. Besonders günstig ist es, wenn eine Vielzahl von derartigen Gruppen identifiziert wird, um eine abgebildete Szene möglichst genau dreidimensional nachbilden zu können. Das erfindungsgemäße Verfahren zeichnet sich durch geringe rechentechnische und messtechnische Anforderungen aus. Bevorzugt wird das erfindungsgemäße Verfahren mit einer erfindungsgemäßen 3D-Aufnahmevorrichtung ausgeführt.
Bei einer Ausgestaltung der Erfindung kann vorgesehen sein, dass aus der jeweiligen Bildposition der Bildbestandteile aus der wenigstens einen Gruppe in den Bildern der Folge wenigstens eine Aufnahmepose der Bildaufnahmevorrichtung zu einem Aufnahmezeitpunkt berechnet wird. Von Vorteil ist dabei, dass eine Aufnahmesituation rechentechnisch einfach nachbildbar ist. Hierzu kann wieder ein Gleichungssystem aufgestellt und gelöst werden. Bevorzugt ist dieses Gleichungssystem dasselbe wie bei der Berechnung der dreidimensionalen Positionsangaben aus den Bildpositionen der Bildbestandteile. Von Vorteil ist dabei, dass mit den Aufnahmeposen ein Strahlenverlauf beim Abbildungsvorgang berechenbar ist.

Bei einer Ausgestaltung der Erfindung kann vorgesehen sein, dass vor oder nach der Skalierung weitere dreidimensionale Positionsangaben zu weiteren Bildbestandteilen berechnet werden. Von Vorteil ist dabei, dass eine Auflösung eines erstelltes 3D-Bild verfeinerbar ist.

Bei einer Ausgestaltung der Erfindung kann vorgesehen sein, dass die weiteren dreidimensionalen Positionsangaben in einem Stereoverfahren berechnet werden. Das Stereoverfahren ist an sich beispielsweise aus DE 10 2007 055 262 A1 bekannt. Es kann beispielsweise dadurch charakterisiert werden, dass zunächst korrespondierende Bildbestandteile in wenigstens zwei Bildern identifiziert werden und anschließend unter Verwendung einer für die Bilder berechneten Aufnahmepose Abbildungsstrahlen in einem dreidimensionalen Raum ermittelt werden, deren (näherungsweiser) Kreuzungspunkt eine weitere dreidimensionale Positionsangabe ergibt.

Bei einer Ausgestaltung der Erfindung kann vorgesehen sein, dass die weiteren dreidimensionalen Positionsangaben aus einer mit einer Level-Set-Methode berechneten Grenzfläche abgeleitet werden. Die Verwendung von Level-Set-Methoden zur Berechnung von Grenzflächen ist an sich bekannt, beispielsweise aus K. Kolev, T. Brox, D. Cremers: Fast Joint Estimation of Silhouettes and Dense 3D Geometry from Multiple Images, IEEE Transactions on Pattern Analysis and Machine Intelligence, 34(3): 493-505, 2012. Die vorteilhaft hierbei verwendbaren Level-Set-Methoden oder auch Niveaumengenmethoden können beispielsweise dadurch charakterisiert werden, dass eine Grenzfläche bestimmt wird, deren Punkte in einem dreidimensionalen Raum in allen Bildern der Folge unter Beachtung der jeweils gültigen, zuvor berechneten Aufnahmepose eine übereinstimmende oder zumindest hinreichend ähnliche Erscheinung haben. Die Grenzfläche beschreibt somit zumindest approximativ einen von der Bildaufnahmevorrichtung detektierten Teil einer Oberfläche einer aufgenommenen Szene. Die weiteren dreidimensionalen Positionsangaben können nun beispielsweise aus der Grenzfläche abgeleitet werden, indem eine Lage der Grenzfläche im Raum und eine Lage von Objekten auf der Grenzfläche ermittelt wird.

Bei einer Ausgestaltung der Erfindung kann vorgesehen sein, dass die wenigstens eine Gruppe von zueinander korrespondierenden Bildbestandteilen mittels Merkmalsanalyse identifiziert wird. Von Vorteil ist dabei, dass charakteristische Bildbestandteile identifizierbar sind und identifiziert werden, für welche korrespondierende Bildbestandteile in den übrigen Bildern leicht rechentechnisch auffindbar sind. Die Merkmalsanalyse kann beispielsweise Ecken-, Kanten- oder sonstige Merkmalsdetektionen, beispielsweise mittels SIFT (scale invariant feature transform - skaleninvariante Merkmalstransformation), verwenden.

Bei einer Ausgestaltung der Erfindung kann vorgesehen sein, dass die aufgenommenen Bilder mit der Bildverarbeitungsvorrichtung segmentiert werden. Von Vorteil ist dabei, dass die Bildsegmente getrennt voneinander verarbeitbar sind. Beispielsweise können Bildsegmente gebildet werden, die jeweils nur einen Bildbestandteil aus einer Gruppe enthalten.

Bei einer Ausgestaltung der Erfindung kann vorgesehen sein, dass die Abstandsinformation automatisch zu einem Szenebestandteil gemessen wird, der der wenigstens einen Gruppe von zueinander korrespondierenden Bildbestandteilen entspricht. Von Vorteil ist dabei, dass eine für die wenigstens eine Gruppe berechnete dreidimensionale Positionsangabe besonders genau mit einer tatsächlich gemessenen Abstandsinformation in Bezug setzbar ist.

Bei einer Ausgestaltung der Erfindung kann vorgesehen sein, dass eine der wenigstens einen Gruppe von zueinander korrespondierenden Bildbestandteilen zugeordnete Abstandsinformation in einem Extra- oder Interpolationsverfahren aus der wenigstens einen gemessenen Abstandsinformation und der wenigstens einen dreidimensionalen Positionsangabe berechnet wird. Von Vorteil ist dabei, dass weitere Abstandsinformationen ohne zusätzliche Messungen gewinnbar sind. Somit ist die Qualität des berechneten 3D-Bildes nochmals steigerbar.

Alternativ oder zusätzlich kann eine weitere Abstandsinformation in einem Extra- und/oder Interpolationsverfahren aus bereits ermittelten dreidimensionalen Positionsangaben berechnet werden. Von Vorteil ist dabei, dass zusätzliche Stützstellen berechnenbar und für ein 3D-Bild bereitstellbar sind.

Bei einer Ausgestaltung der Erfindung kann vorgesehen sein, dass die Skalierung aus der der wenigstens einen Gruppe von zueinander korrespondierenden Bildbestandteilen zugeordneten Abstandsinformation berechnet wird. Bevorzugt ist diese Abstandsinformation in einem Extra- oder Interpolationsverfahren berechnet. Von Vorteil ist dabei, dass die Genauigkeit der Skalierung steigerbar ist, ohne dass eine gezielte Messung einer Abstandsinformation erforderlich ist. Die Abstandsinformation kann auch direkt gemessen werden.

Bei einer Ausgestaltung der Erfindung kann vorgesehen sein, dass die Abstandsinformation mit einem Messstrahl gemessen wird, der in dem Spektralbereich liegt, in welchem der Spektralbereich die Bildaufnahmevorrichtung aufnimmt. Von Vorteil ist dabei, dass eine Kalibrierung vornehmbar ist. Hierzu kann ein Auftreffpunkt des Messstrahls auf einem Szeneobjekt - beispielsweise ein Lichtmuster - als markanter Bildbestandteil zur Identifikation einer Gruppe von korrespondierenden Bildbestandteilen verwendet werden. Somit ist mit den erwähnten Gleichungen berechenbar, in welcher Weise das Abstandsmessgerät in Bezug auf die Bildverarbeitungsvorrichtung ausgerichtet ist. Mit diesem Ergebnis der Kalibrierung ist die Genauigkeit der Berechnung von dreidimensionalen Positionsangaben nochmals steigerbar.

Bei einer Ausgestaltung der Erfindung kann vorgesehen sein, dass eine Bewegung der Bildaufnahmevorrichtung zwischen zwei Einzelaufnahmen unter Verwendung eines Ausgangssignals eines Bewegungs- und/oder Beschleunigungssensors berechnet wird. Von Vorteil ist dabei, dass die Berechnung von dreidimensionalen Positionsangaben nochmals vereinfachbar ist, da zusätzliche Informationen über eine Veränderung einer Aufnahmepose zwischen zwei Einzelaufnahmen bereitstehen.

Bei einer Ausgestaltung der Erfindung kann vorgesehen sein, dass die wenigstens eine dreidimensionale Positionsangabe mittels eines SLAM-(Simultaneous Localisation And Mapping-) Verfahren berechnet wird. Zusätzlich oder alternativ kann vorgesehen sein, dass die wenigstens eine dreidimensionale Positionsangabe mittels eines structure-from-motion-Verfahren berechnet wird. Von Vorteil ist dabei, dass an sich bekannte Algorithmen verwendbar sind, um Verfahrensschritte umzusetzen.

Bei einer Ausgestaltung der Erfindung kann vorgesehen sein, dass eine dreidimensionale Darstellung der wenigstens einen Gruppe von zueinander korrespondierenden Bildbestandteilen an der wenigstens einen skalierten dreidimensionalen Positionsangabe berechnet wird. Von Vorteil ist dabei, dass zumindest näherungsweise ein 3D-Bild beziehungsweise ein 3D-Modell einer aufgenommenen Szene erzeugbar ist.

Bei einer Ausgestaltung der Erfindung kann vorgesehen sein, dass ein Raumbereich, in welchem weitere dreidimensionale Positionsangaben zu berechnen sind, identifiziert und das Abstandsmessgerät so angesteuert wird, dass eine Abstandsinformation für den Raumbereich gemessen wird. Von Vorteil ist dabei, dass weitere dreidimensionale Positionsangaben gezielt gewinnbar sind. Somit ist ein berechnetes 3D-Bild gezielt verbesserbar.

Hierbei kann vorgesehen sein, dass zur Ansteuerung des Abstandsmessgeräts eine aktuelle Aufnahmepose aus zuvor berechneten Aufnahmeposen berechnet oder geschätzt wird. Dies kann beispielsweise durch zeitliche Extrapolation einer Folge von Aufnahmeposen und/oder durch Auswertung eines Ausgangssignals eines Bewegungs- und/oder Beschleunigungssensors erfolgen. Von Vorteil ist dabei, dass eine momentane Aufnahmepose zumindest näherungsweise als Bezugsgröße bereitstellbar ist.

Bei einer Ausgestaltung der Erfindung kann vorgesehen sein, dass in die wenigstens eine dreidimensionale Positionsangabe ein geometrisches Objekt eingepasst wird. Von Vorteil ist dabei, dass komplexere Objekte mit einfachen rechentechnischen Mitteln bildbar sind. Eine tatsächliche Gestalt einer aufgenommenen Szene ist somit mit geringem rechentechnischem Aufwand nachbildbar.

Bei einer Ausgestaltung der Erfindung kann vorgesehen sein, dass zur Berechnung der wenigstens einen dreidimensionalen Positionsangabe ein RANSAC-(Random Sample Concensus-)Verfahren ausgeführt wird. Von Vorteil ist dabei, dass ein mit geringem rechentechnischem Aufwand implementierbares Verfahren bereitgestellt ist, das brauchbare Ergebnisse liefert.
Bei einer Ausgestaltung der Erfindung kann vorgesehen sein, dass wenigstens eine Länge, ein Flächeninhalt und/oder ein Rauminhalt aus den vorzugsweise skalierten dreidimensionalen Positionsangaben berechnet wird/werden. Somit sind gewonnene Messgrößen auf reale Größenverhältnisse beziehbar.
Bei einer Ausgestaltung der Erfindung kann vorgesehen sein, dass die wenigstens eine Gruppe mittels einer Ausgabeeinheit an einem der wenigstens einen dreidimensionalen Positionsangabe entsprechenden Bildpunkt ausgegeben wird. Von Vorteil ist dabei, dass zweidimensionale Abbilder einer dreidimensionalen Darstellung erzeugbar und ausgebbar sind und erzeugt und ausgegeben werden. Die Ausgabe kann beispielsweise durch eine Anzeige oder einen Ausdruck, eine Hinterlegung einer digitalen Darstellung oder auf andere Weise erfolgen.

Zur Lösung der genannten Aufgabe werden erfindungsgemäß bei einem Verfahren zur Einrichtung einer 3D-Aufnahmevorrichtung die Merkmale des Anspruchs 21 vorgeschlagen. Insbesondere wird vorgeschlagen, dass ein Abstandsmessgerät mit einer Bildaufnahmevorrichtung verbunden wird, dass eine Folge von wenigstens einem Bild einer Szene aufgenommen wird, dass zu jedem Bild wenigstens eine Abstandsinformation gemessen wird, dass zu jeder gemessenen Abstandsinformation eine Bildposition in dem zugehörigen Bild bestimmt wird, auf die diese Abstandinformation bezogen ist, und dass aus den gemessenen Abstandsinformationen und den bestimmten Bildpositionen wenigstens ein Parameter berechnet wird, der eine Ausrichtung des Abstandsmessgeräts relativ zu der Bildaufnahmevorrichtung beschreibt. Die erforderliche Zahl der aufgenommenen Bilder in der Folge hängt von der Zahl der zu berechnenden Parameter für die Ausrichtung des Abstandsmessgeräts relativ zu der Bildaufnahmevorrichtung ab. Je mehr Freiheitsgrade die Ausrichtung hat, desto mehr Bilder und zugeordnete Abstandsmessungen sind zur Festlegung der Parameter erforderlich. Im günstigsten Fall kann bereits ein Bild mit einer Abstandsinformation ausreichend sein, um einen verbleibenden Freiheitsgrad der Ausrichtung festzulegen. Bei einer hinreichend großen Anzahl von aufgenommenen Bildern und Abstandsinformationen sind auch Parameter, die einer Abbildungseigenschaft der Bildaufnahmevorrichtung, beispielsweise Brennweite, Verzeichnung, Hauptpunkt und weitere Parameter eines Linsensystems, beschreiben, berechenbar und werden mit an sich bekannten Gleichungen berechnet. Somit sind Parameter bereitstellbar oder festlegbar, mit welchen das beschriebene Verfahren zur Erstellung eines 3D-Bildes ausführbar ist.Von Vorteil ist dabei, dass eine vorhandene Bildaufnahmevorrichtung, beispielsweise ein Smartphone, Tablet-PC oder dergleichen, einfach nachrüstbar ist. Die Bildaufnahmevorrichtung kann durch Installation einer geeignet programmierten Software, beispielsweise einer App, zur Ausführung des erfindungsgemäßen Verfahrens zur Erstellung eines 3D-Bildes eingerichtet sein. Hierbei wird die Zahl der aufgenommenen Bilder in der Folge günstiger Weise davon abhängen, wie viele Parameter der Ausrichtung des Abstandsmessgeräts relativ zu der Bildaufnahmevorrichtung bereits bekannt sind oder im Rahmen der erforderlichen Genauigkeit als gegeben angenommen werden können. Je mehr Parameter der Ausrichtung bekannt sind, je weniger Freiheitsgrade der Ausrichtung daher verbleiben, desto weniger Aufnahmen von Bilder in der Folge sind erforderlich.

Bei genügend großer Anzahl von aufgenommenen Bildern in der Folge können auf diese Weise auch Parameter berechnet werden, welche ein Abbildungsverhalten der Bildaufnahmevorrichtung charakterisieren. Dies können beispielsweise die Brennweite, der Hauptpunkt, die Verzeichnung oder weitere Parameter der Bildaufnahmevorrichtung sein.

Bei einer Ausgestaltung der Erfindung kann vorgesehen sei, dass die bekannte und/oder künstlich erzeugte Szene mit einem Messstrahl des Abstandsmessgeräts projiziert wird. Somit ist auf einfache Weise bei jedem Verbinden mit dem Abstandsmessgerät erneut eine Kalibrierung ausführbar, wenn die Ausrichtung des Abstandsmessgeräts nicht bekannt ist.

Die Erfindung wird nun anhand von Ausführungsbeispielen näher erläutert, ist aber nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine erfindungsgemäße 3D-Aufnahmevorrichtung in stark vereinfachter Darstellung zur Erläuterung der Erfindung,
- Fig. 2: eine weitere erfindungsgemäße 3D-Aufnahmevorrichtung in stark vereinfachter Darstellung,
- Fig. 3: eine weitere erfindungsgemäße 3D-Aufnahmevorrichtung in stark vereinfachter Darstellung,
- Fig. 4: die Aufnahme von Bildern einer Szene in stark vereinfachter Darstellung zur Erläuterung des erfindungsgemäßen Verfahrens,
- Fig. 5: einen Programmablaufplan, welcher bei den Ausführungsbeispielen der Erfindung gemäß Fig. 1 bis 3 abgearbeitet wird,
- Fig. 6: in einer stark vereinbarten Prinzipdarstellung die Interpolation von Abstandsinformationen bei einem Ausführungsbeispiel der Erfindung und
- Fig. 7: eine Folge von bei dem erfindungsgemäßen Verfahren aufgenommenen Bildern.

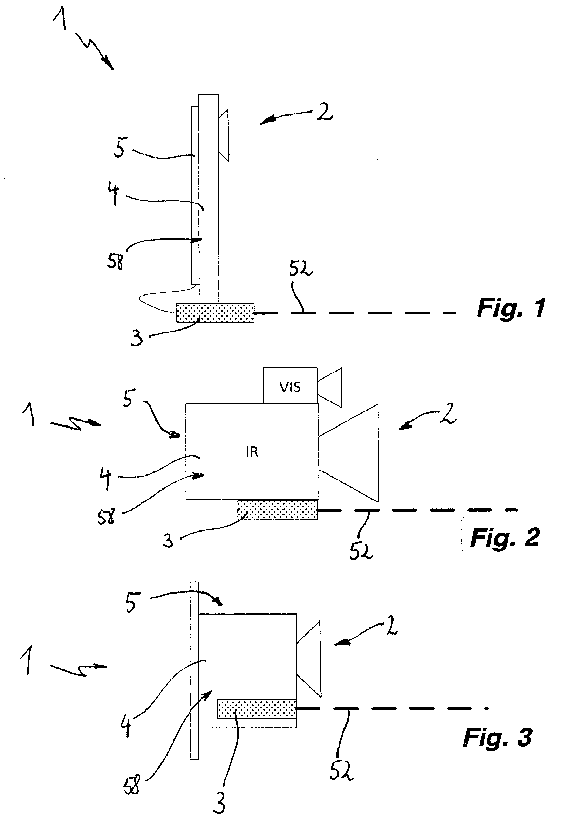

Fig. 1 zeigt in einer stark vereinfachten Prinzipdarstellung eine erfindungsgemäße 3D-Aufnahmevorrichtung.

In Fig. 1 ist die 3D-Aufnahmevorrichtung 1 als aufgerüstetes Smartphone gezeigt.

Die 3D-Aufnahmevorrichtung 1 hat eine Bildaufnahmevorrichtung 2 und ein Abstandsmessgerät 3. Das Abstandsmessgerät 3 ist zur Messung eines Abstands entlang einer Messrichtung eingerichtet. Im Ausführungsbeispiel ist das Abstandsmessgerät 3 als Laser-Abstandsmessgerät ausgebildet.

Im Ausführungsbeispiel ist die Bildaufnahmevorrichtung 2 eine digitale Kamera des gezeigten Smartphones.

Das Abstandmessgerät 3 ist an das Smartphone zur Bildung der 3D-Aufnahmevorrichtung 1 angesteckt und zum Daten- und/oder Signalaustausch angeschlossen.

Im Inneren der 3D-Aufnahmevorrichtung 1 ist eine Bildverarbeitungsvorrichtung 4 ausgebildet.

An der 3D-Aufnahmevorrichtung 1 ist ferner eine Ausgabeeinheit 5 in Form eines Displays ausgebildet.

Fig. 2 und Fig. 3 zeigen jeweils eine weitere erfindungsgemäße 3D-Aufnahmevorrichtung 1 in stark schematisierter Prinzipdarstellung zur Erläuterung der Erfindung. Funktionell und/oder konstruktiv zu dem Ausführungsbeispiel gemäß Fig. 1 gleichartige oder ähnlich Bauteile und Funktionseinheiten sind mit denselben Bezugszeichen bezeichnet und nicht noch einmal gesondert beschrieben. Die Ausführungen zu Fig. 1 gelten daher zu Fig. 2 und zu Fig. 3 jeweils entsprechend.

Das Ausführungsbeispiel gemäß Fig. 2 unterscheidet sich von dem Ausführungsbeispiel gemäß Fig. 1 dadurch, dass die Bildaufnahmevorrichtung 2 als Wärmebildkamera ausgebildet ist. Mit der Bildaufnahmevorrichtung 2 sind somit Lichtstrahlen in einem infraroten Spektralbereich detektierbar, um ein Wärmebild zu erstellen und/oder eine Temperaturverteilung berührungslos zu messen.

Zusätzlich weist die 3D-Aufnahmevorrichtung 1 in Fig. 2 noch eine VIS-(visible-)Kamera 6 auf, um in an sich bekannter Weise Bilder im sichtbaren Spektralbereich aufzunehmen.

Das Ausführungsbeispiel gemäß Fig. 3 unterscheidet sich von dem Ausführungsbeispiel gemäß Fig. 1 dadurch, dass die Bildaufnahmevorrichtung 2, das Abstandsmessgerät 3, die Bildverarbeitungsvorrichtung 4 und die Ausgabeeinheit 5 in ein Gerät integriert ausgeführt sind. Die Ausgabeeinheit 5 kann auch entfallen oder als Datenschnittstelle ausgebildet sein.

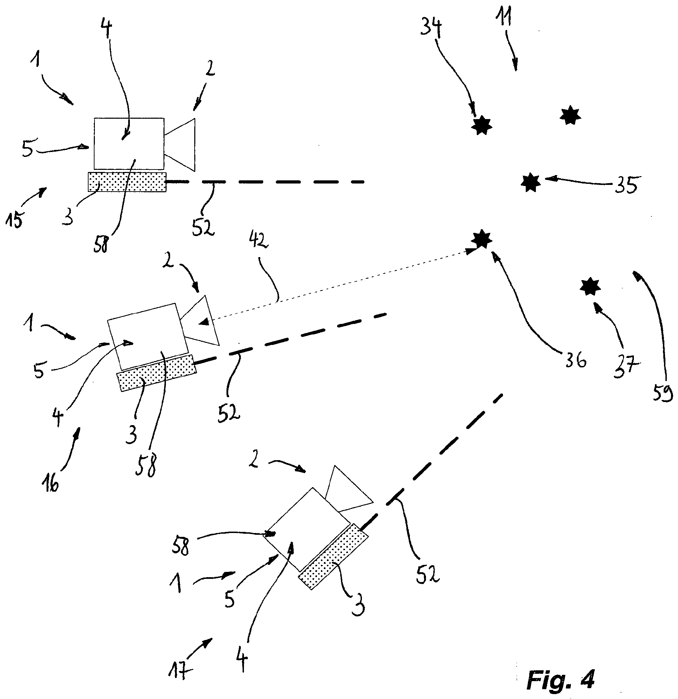

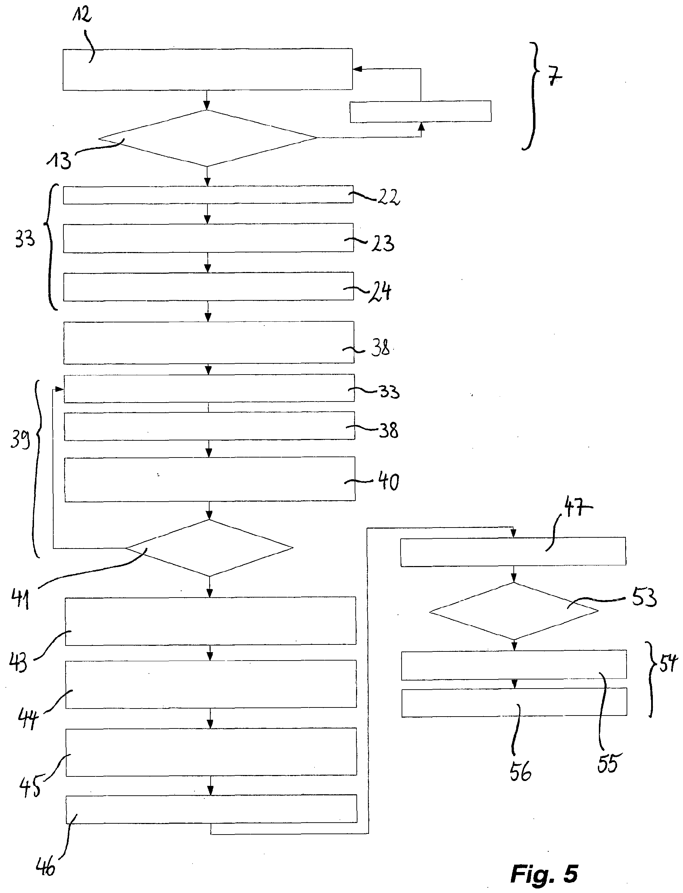

Die Bildverarbeitungsvorrichtungen 4 der gezeigten Ausführungsbeispiele sind durch Programmierung und elektronische Verschaltung zur Ausführung des im Folgenden anhand der Fig. 4 bis 7 beschriebenen erfindungsgemäßen Verfahrens eingerichtet.

Zunächst wird in einem Bildaufnahmeschritt 7 eine Folge 8 von Bildern 9, 10 einer Szene 11 aufgenommen.

Hierbei ist die Bildaufnahmevorrichtung 2 zur Aufnahme 12 der Bilder 9, 10 eingerichtet.

Nach jeder Aufnahme 12 erfolgt eine Abfrage 13, ob weitere Aufnahmen 12 durchgeführt werden sollen.

Ist dies der Fall, so wird zunächst eine Änderung 14 der Aufnahmepose, also der Position und der Orientierung, der Bildaufnahmevorrichtung 2 durchgeführt.

Die Bildaufnahmevorrichtung 2 wird hierdurch beispielsweise von der Aufnahmepose 15 in die Aufnahmeposition 16 überführt.

Anschließend wird eine neue Aufnahme 12 ausgeführt.

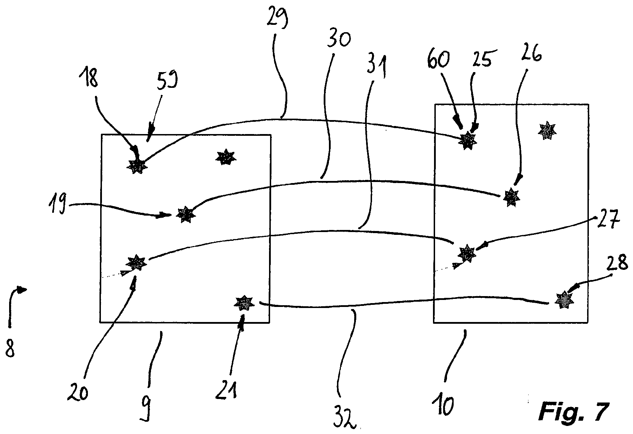

Beispielsweise nimmt die Bildaufnahmevorrichtung 2 somit in der Aufnahmepose 15 das Bild 9 und in der Aufnahmepose 16 das Bild 10 auf. Es ergibt sich die in Fig. 7 dargestellte Folge 8 von Bildern 9, 10.

Im Beispiel sollen mindestens drei Bilder 9, 10 zur Bildung einer Folge 8 aufgenommen werden. Tatsächlich wird eine Vielzahl von Bildern 9, 10, beispielsweise als Frames einer Videosequenz, aufgenommen.

Wird die Abfrage 13 verneint, so wird die Erstellung der Folge 8 abgeschlossen.

Nun werden in einem ersten Bild 9 der Folge 8 markante Bildbestandteile 18, 19, 20, 21 in einem Identifikationsschritt 22 identifiziert. Dies kann durch Kanten- und/oder Eckendetektion, Kontrastdetektion oder auf andere Weise erfolgen.

In einer Merkmalsanalyse 23 wird eine Beschreibung der Bildbestandteile 18, 19, 20, 21 durch Merkmale berechnet.

In einem Korrespondenzbestimmungsschritt 24 wird mit der Bildverarbeitungsvorrichtung 4 nach Bildbestandteilen 25, 26, 27, 28 in dem zweiten Bild 10 in der Folge 8 gesucht, die zu den Bildbestandteilen 18, 19, 20, 21 anhand der berechneten Beschreibung korrespondieren. Hierzu können beispielsweise Korrelationsverfahren und/oder an sich bekannte SLAM- und/oder structure-from-motion-Verfahren eingesetzt werden.

Die zueinander korrespondierenden Bildbestandteile 18 und 25 bzw. 19 und 26 bzw. 20 und 27 bzw. 21 und 28 bilden somit jeweils eine Gruppe 29, 30, 31, 32 von je zwei paarweise zueinander korrespondierenden Bildbestandteilen 18, 19, 20, 21, 25, 26, 27, 28.

Die Bildverarbeitungsvorrichtung 4 ist somit zur automatischen Identifikation 33 von wenigstens einer Gruppe, hier beispielhaft vier Gruppen 29, 30, 31 und 32, von zueinander korrespondierenden Bildbestandteilen 18, 19, 20, 21, 25, 26, 27, 28 eingerichtet.

Die Gruppen 29, 30, 31, 32 enthalten somit jeweils diejenigen Bildbestandteile 18, 19, 20, 21, 25, 26, 27 und 28, die von einem gemeinsamen Szenebestandteil 34, 35, 36, 37 stammen: So sind die Bildbestandteile 18 und 25 im Beispiel von dem Szenebestandteil 34 aufgenommen, die Bildbestandteile 19 und 26 von dem Szenebestandteil 35, die Bildbestandteile 20 und 27 von dem Szenebestandteil 36 und die Bildbestandteile 21 und 28 von dem Szenebestandteil 37. Tatsächlich wird eine viel größere Zahl von Bildbestandteilen 18, 19, 20, 21, 25, 26, 27, 28 verarbeitet.

Die Bildverarbeitungsvorrichtung 4 ist zur anschließenden Berechnung 38 einer dreidimensionalen Positionsangabe 50 zu jeder Gruppe 29, 30, 31, 32 eingerichtet.

Hierzu wird in der Bildverarbeitungsvorrichtung 4, die hierzu eine separate, nicht weiter dargestellte Recheneinheit aufweisen kann, ein Gleichungssystem automatisch generiert und gelöst, welches die Bildpositionen 59, 60 der Bildbestandteile 18, 19, 20, 21, 25, 26, 27, 28 in den Bildern 9, 10 als Projektionen der Szenebestandteile 34, 35, 36, 37 während der jeweiligen Aufnahme 12 beschreibt. In dieses Gleichungssystem gehen die Bildpositionen 59, 60 der Bildbestandteile 18, 19, 20, 21, 25, 26, 27, 28 in den Bildern 9, 10 als Eingangsgrößen ein.

Im Ergebnis entsprechen die berechneten dreidimensionalen Positionsangaben 50 bis auf einen Skalenfaktor der Raumposition des Szenebestandteils 34, 35, 36, 37, welchen die Gruppe 29, 30, 31 bzw. 32 jeweils repräsentiert.

Aus der Lösung des erwähnten Gleichungssystems wird in der Berechnung 38 auch die zugehörige Aufnahmepose 15, 16 zum Zeitpunkt der Aufnahme 12 des Bildes 9 oder 10 berechnet.

Zur Berechnung 38 kann beispielsweise ein RANSAC-Verfahren verwendet werden.

Es schließt sich eine Schleife 39 an, in welcher die beschriebene Identifikation 33 und Berechnung 38 für weitere Bilder der Folge 8, die zu weiteren Aufnahmeposen 17 gehören, durchgeführt werden.

In einer Ausgleichsrechnung 40 werden die berechneten Aufnahmeposen 15, 16, 17 und dreidimensionalen Positionsangaben 50 mit den neu berechneten Daten verfeinert.

Die Schleife 39 wird abgebrochen, wenn eine Abfrage 41 ergibt, dass die Folge 8 keine weiteren Bilder 9, 10 aufweist, die verarbeitet werden müssen.

Während der Aufnahmen 12 wird mit dem Abstandsmesgerät 3 jeweils eine Abstandsinformation 42 gemessen.

In Fig. 4 ist dargestellt, dass die in der Aufnahmepose 16 gemessene Abstandsinformation 42 den Abstand zwischen der Bildaufnahmevorrichtung 2 und dem Szenebestandteil 36 zum Zeitpunkt der Aufnahme 12 des Bildes 10 darstellt.

Die Messungen in den Aufnahmeposen 15 und 17 betreffen dagegen keinen Szenebestandteil 34, 35, 36 oder 37, sondern gehen ins Leere.

Es ist der Einfachheit halber nur eine Abstandsinformation 42 gezeigt, obwohl für jede Aufnahmepose 15, 16, 17 jeweils mindestens eine Abstandsinformation 42 gemessen wird.

Die Ausrichtung des Abstandsmessgeräts 3 in Bezug auf die Aufnahmepose 15, 16, 17 ist jeweils bekannt. Sie kann - wie hier gezeigt - unveränderlich sein, oder das Abstandsmessgerät 3 kann gegenüber der Bildaufnahmevorrichtung 2 beweglich ausgebildet sein. Es kann auch ein unbewegliches Abstandsmessgerät 3 zur Veränderung des Messstrahls 52 - beispielsweise mittels einer Optik oder mittels Spiegel - eingerichtet sein.

In einem Strahlenberechnungsschritt 43 werden aus den zuvor berechneten Aufnahmeposen 15, 16, 17 und den gemessenen Abstandsinformationen 42 jeweils 3D-Raumpunkte berechnet, zu denen die Abstandsinformation 42 gemessen wurde.

In einem Selektionsschritt 44 werden diejenigen Abstandsinformationen 42 ausgewählt, die genügend nahe an einer dreidimensionalen Positionsangabe einer Gruppe 29, 30, 31, 32 liegen und so den Abstand zum zugehörigen Szenebestandteil 34, 35, 36, 37 hinreichend genau beschreiben. Mit anderen Worten werden in diesem Schritt Ausreißer eliminiert.

Diese selektierten Abstandsinformationen 42 können somit als Referenzmaßstab verwendet werden. In einem Skalierungsberechnungsschritt 45 wird ein optimaler Skalenfaktor berechnet. Dies kann beispielsweise basierend auf allen sinnvollen Korrelationen zwischen Abstandsinformationen 42 und berechneten dreidimensionalen Positionsangaben 50 erfolgen.

Anschließend werden die berechneten dreidimensionalen Positionsangaben 50 in einer Skalierung 46 skaliert, so dass sie mit den tatsächlichen Abmessungen und Positionen der Szenebestandteile 34, 35, 36, 37 übereinstimmen.

In einem Extra- und/oder Interpolationsverfahren 47 werden zu dreidimensionalen Positionsangaben, denen keine gemessene Abstandsinformation 42 zuordenbar ist, weitere Abstandsinformationen berechnet.

In dem Extra- und/oder Interpolationsverfahren 47 werden zu den zuvor eliminierten Abstandsinformationen 42 weitere dreidimensionale Positionsangaben 48, 49 berechnet.

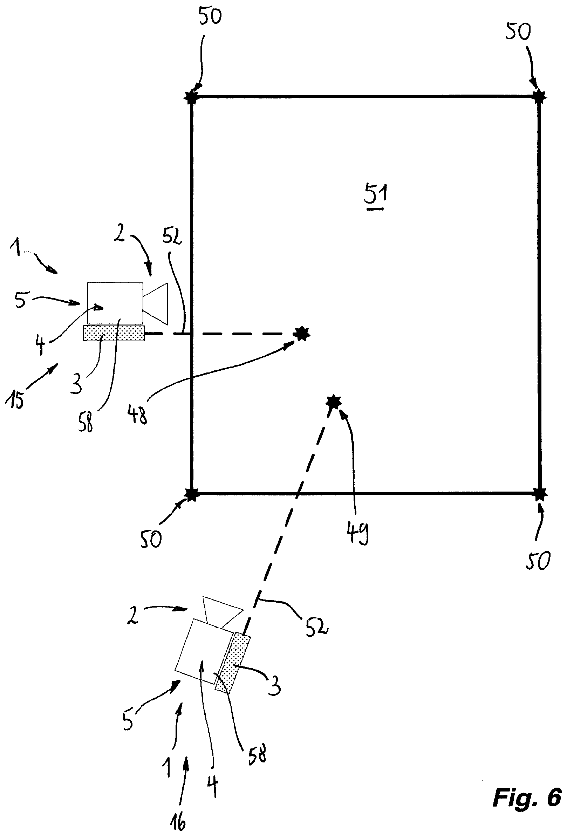

Dies zeigt Fig. 6: Hierzu wird in die zuvor zu den Gruppen 29, 30, 31, 32 berechneten dreidimensionalen Positionsangaben 50 ein geometrisches Objekt 51 (hier eine Ebene) mittels einer Optimierung eingepasst.

Die berechneten weiteren dreidimensionalen Positionsangaben 48 und 49 ergeben sich als Schnittpunkte eines Messstrahls 52 des Abstandsmessgeräts 3 mit dem geometrischen Objekt 51.

Diese berechneten weiteren dreidimensionalen Positionsangaben 48, 49 werden als zusätzliche Stützstellen zur Erstellung einer dreidimensionalen Darstellung der Gruppen 29, 30, 31, 32 an ihren jeweiligen dreidimensionalen Positionsangaben 50 in einem 3D-Bild verwendet.

An der Ausgabeeinheit 5 sind aus diesem 3D-Bild grafische Darstellungen ausgebbar, in denen die Gruppen 29, 30, 31, 32 an einem Bildpunkt, der durch die zugehörige dreidimensionale Positionsangabe 48, 49, 50 gegeben ist, angezeigt werden.

In einer Abfrage 53 kann eine weitere Verarbeitung 54 der Rechenergebnisse gestartet werden.

In dieser Verarbeitung 54 kann eine Segmentierung 55 von Flächen oder anderen Bildsegmenten in den Bildern 9, 10 ausgeführt werden. Das Abstandsmessgerät 3 kann mit einer Ansteuerungseinheit 56 auf Szenebestandteile 34, 35, 36, 37 der Szene 11 ausgerichtet werden, die zu den segmentierten Flächen gehören. Hierzu ist das Abstandsmessgerät 3 beweglich an der 3D-Aufnahmevorrichtung 1 angeordnet.

Nun können weitere Abstandsinformationen 42 zu den neuen Ausrichtungen gemessen werden.

In einem Objektberechnungsschritt 56 werden zu den segmentierten Flächen oder anderen Bildsegmenten einerseits und den dreidimensionalen Positionsangaben 48, 49, 50 andererseits Ebenen oder andere geometrische Objekte 51 berechnet.

Durch die Skalierung 46 kann für die geometrischen Objekte 51 eine tatsächliche Ausdehnung oder Größe, beispielsweise eine tatsächliche Länge oder ein tatsächlicher Flächen- oder Rauminhalt berechnet werden.

Ist die Ausrichtung des Abstandsmessgeräts 3 relativ zu der Bildaufnahmevorrichtung 2 unbekannt, so kann in einer Kalibrierung statt der Szenebestandteile 34, 35, 36, 37 ein Lichtmuster des Messstrahls 52 auf einer ebenen Oberfläche einer Szene 11 in der beschrieben Weise verwendet werden. Aus den Bildpositionen dieses Lichtmusters in den Bildern 9, 10 kann die unbekannte Ausrichtung berechnet werden.

Hierzu ist mit dem Abstandsmessgerät 3 ein Messstrahl 52 in einem Spektralbereich generierbar, in welchem die Bildaufnahmevorrichtung 2 sensitiv ist, um das Lichtmuster zu detektieren. Alternativ kann auch eine bekannte Szene 11 mit bekannter Geometrie aufgenommen werden.

Die 3D-Aufnahmevorrichtung 1 weist einen an sich bekannten Bewegungs- und/oder Beschleunigungssensor 58, mit welchem eine Änderung der Aufnahmepose 15, 16, 17 zwischen zwei Aufnahmen 12 erfassbar ist. Dessen Ausgangssignal fließt in die Berechnung der Aufnahmeposen 15, 16, 17 ein.

Stellt die Bildverarbeitungsvorrichtung 4 und/oder der Benutzer fest, dass in einem Raumbereich zusätzliche dreidimensionale Positionsangaben 48, 49 benötigt werden, so kann nach dem folgenden Verfahren vorgegangen werden.

Es sei angenommen, dass in Fig. 4 eine erste Aufnahme 12 in der Aufnahmepose 15 und eine zweite Aufnahme 12 in einer Aufnahmepose 16 ausgeführt wurde. Es ergeben sich in der beschriebenen Weise die dreidimensionalen Positionsangaben 50 der Szenebestandteile 34, 35, 36, 37 aus der Verarbeitung der Bilder 9, 10.

Angenommen, der Benutzer oder ein in der Bildverarbeitungsvorrichtung ablaufendes Programm kommt zu dem Ergebnis, dass in einem Raumbereich 59 noch zu wenige dreidimensionale Positionsangaben 50 vorliegen.

Aus der Auflösung des bereits erwähnten Gleichungssystems wurden bereits die Aufnahmeposen 15, 16 der Bilder 9, 10 berechnet.

Hieraus kann durch Extrapolation die Aufnahmepose 17, in welcher sich die Bildaufnahmevorrichtung 2 momentan befindet, berechnet werden.

Die Aufnahmepose 17 kann alternativ oder zusätzlich aus den Ausgangssignalen des Bewegungs- und/oder Beschleunigungssensors 58 - gegebenenfalls durch geeignete Integration - ermittelt werden.

Bei bekannter Aufnahmepose 17 wird nun der Messstrahl 52 des Abstandsmessgeräts 3 so ausgerichtet, dass eine Abstandsinformation zu dem Raumbereich 59 und/oder einem darin befindlichen Szenebestandteil 37 messbar ist. Dies geschieht durch an sich zur Strahlumlenkung bekannte Mittel wie Spiegel und dergleichen.

Zu dieser Abstandsinformation wird anschließend die benötigte weitere dreidimensionale Positionsangabe berechnet.

Fig. 1 zeigt eine erfindungsgemäße 3D-Aufnahmevorrichtung 1 mit einem abnehmbaren Abstandsmessgerät 3. Durch die Abnehmbarkeit ergibt sich, dass die genaue Ausrichtung des Messstrahls 52 in Bezug auf eine Aufnahmerichtung der Bildaufnahmevorrichtung 2 unbekannt ist.

Die Information über diese Ausrichtung kann in einer Kalibrierung auf einfache Weise gewonnen werden.

Hierzu wird mit dem Abstandsmessgerät 3 ein Lichtmuster, im einfachsten Fall ein einzelner Lichtpunkt, auf eine Szene 11, beispielsweise eine ebene Oberfläche, projiziert. Es ergibt sich so die Situation von Fig. 4, wobei die Szenebestandteile 34, 35, 36, 37 durch Bestandteile des Lichtmusters gegeben sind. Im Fall eines einzelnen Lichtpunktes tritt hierbei nur ein Szenebestandteil 34 auf.

Das Lichtmuster entsteht beispielsweise aus der Messung der Abstandsinformation 42 mit einem Laser-Abstandsmessgerät oder wird unabhängig von der Messung der Abstandsinformation 42 projiziert.

Dieses Lichtmuster wird in den Bildern 9, 10 aus unterschiedlichen Aufnahmeposen 15, 16, 17 aufgenommen. In der beschriebenen Weise werden zu den Bildbestandteilen 18, 19, 20, 21 und 25, 26, 27, 28 dreidimensionale Positionsangaben 50 berechnet. Ferner werden die Aufnahmeposen 15, 16, 17 berechnet.

Da die Geometrie des Lichtmusters bekannt ist, kann hieraus diejenige Ausrichtung des Abstandsmessgeräts 3 bzw. des Messstrahls 52 relativ zu der Bildaufnahmevorrichtung 2 berechnet werden, für welche das Lichtmuster mit den berechneten dreidimensionalen Positionsangaben 50 übereinstimmt.

Bei einer Abstandsmessung ohne sichtbares Licht kann die Kalibrierung mit Hilfe einer bekannten Szene 11, beispielsweise einem ausgedruckten Muster, durchgeführt werden.

Diese Information über die Ausrichtung wird nun hinterlegt und für eine spätere Verarbeitung von Bildern 9, 10 einer unbekannten Szene 11 bereitgestellt.

Diese Kalibrierung kann bei jedem Verbinden des Abstandsmessgeräts 3 mit der Bildaufnahmevorrichtung 2 erneut ausgeführt werden.

Bei einer 3D-Aufnahmevorrichtung 1 mit einer Bildaufnahmevorrichtung 2, einem Abstandsmessgerät 3 und einer Ausgabeeinheit 5 wird vorgeschlagen, mit einer Bildverarbeitungsvorrichtung 4 in einer Folge 8 von in unterschiedlichen Aufnahmeposen 15, 16, 17 aufgenommenen Bildern 9, 10 Gruppen 29, 30, 31, 32 von zueinander korrespondierenden Bildbestandteilen 18, 19, 20, 21, 25, 26, 27, 28 zu berechnen und zu diesen Gruppen 29, 30, 31, 32 jeweils eine dreidimensionale Positionsangabe 48, 49, 50 zu ermitteln und die dreidimensionale Positionsangabe 48, 49, 50 mit einer durch das Abstandsmessgerät 3 gemessenen Abstandsinformation 42 zu skalieren (Fig. 4).

## Patentansprüche

1. 3D-Aufnahmevorrichtung (1) mit einer Bildaufnahmevorrichtung (2), einem Abstandsmessgerät (3) und einer Bildverarbeitungsvorrichtung (4), wobei die Bildverarbeitungsvorrichtung (4) zur Identifikation (33) wenigstens einer Gruppe (29, 30, 31, 32) von zueinander korrespondierenden Bildbestandteilen (18, 19, 20, 21, 25, 26, 27, 28) in einer Folge (8) von wenigstens zwei mit der Bildaufnahmevorrichtung (2) aufgenommenen Bildern (9, 10) eingerichtet ist, die Bildverarbeitungsvorrichtung (4) zur Berechnung (38) wenigstens einer dreidimensionalen Positionsangabe (50) zu der wenigstens einen Gruppe (29, 30, 31, 32) von zueinander korrespondierenden Bildbestandteilen (18, 19, 20, 21, 25, 26, 27, 28) aus einer jeweiligen Bildposition (59, 60) der Bildbestandteile (18, 19, 20, 21, 25, 26, 27, 28) aus der Gruppe (29, 30, 31, 32) in den Bildern (9, 10) der Folge (8) eingerichtet ist, wobei die Bildverarbeitungsvorrichtung (4) zur Berechnung (38) einer Aufnahmepose der Bildaufnahmevorrichtung (2) aus den jeweiligen Bildpositionen (59, 60) der Bildbestandteile (18, 19, 20, 21, 25, 26, 27, 28) der wenigstens einen Gruppe (29, 30, 31, 32) eingerichtet ist, und die Bildverarbeitungsvorrichtung (4) zur Skalierung (46) der berechneten wenigstens einen dreidimensionalen Positionsangabe (50) mittels einer mit dem Abstandsmessgerät (3) gemessenen Abstandsinformation (42) eingerichtet ist, wobei die Bildverarbeitungsvorrichtung (4) zur Berechnung weiterer Abstandsinformationen zu der wenigstens einen Gruppe (29, 30, 31, 32) von zueinander korrespondierenden Bildbestandteilen (18, 19, 20, 21, 25, 26, 27, 28) zugeordneten dreidimensionalen Positionsangaben, denen keine gemessene Abstandsinformation (42) zuordenbar ist, in einem Extra- und/oder Interpolationsverfahren (47) aus der gemessenen Abstandsinformation (42) und der dreidimensionalen Positionsangabe (50) eingerichtet ist, und wobei das Abstandsmessgerät (3) zur Erzeugung eines Messstrahls (52) in einem von der Bildaufnahmevorrichtung (2) detektierbaren Spektralbereich ausgebildet ist.

2. 3D-Aufnahmevorrichtung (1) nach Anspruch 1, **dadurch gekennzeichnet, dass** eine Ausgabeeinheit (5) zur Ausgabe der wenigstens einen skalierten dreidimensionalen Positionsangabe ausgebildet ist und/oder dass das Abstandsmessgerät (3) als Laser-Abstandsmessgerät ausgebildet ist.

3. 3D-Aufnahmevorrichtung (1) nach Anspruch 1 oder 2, **dadurch gekennzeichnet, dass** die Bildverarbeitungsvorrichtung zur Berechnung weiterer dreidimensionaler Positionsangaben (48, 49) aus den berechneten dreidimensionalen Positionsangaben (50) und Aufnahmeposen (15, 16, 17), insbesondere in einem Stereoverfahren und/oder aus einer mit einer Level-Set-Methode berechneten Grenzfläche, eingerichtet ist.

4. 3D-Aufnahmevorrichtung (1) nach einem der Ansprüche 1 bis 3, **dadurch gekennzeichnet, dass** die Bildverarbeitungsvorrichtung (4) zur Identifikation (33) der wenigstens einen Gruppe (29, 30, 31, 32) von zueinander korrespondierenden Bildbestandteilen (18, 19, 20, 21, 25, 26, 27, 28) mittels Merkmalsanalyse (23) eingerichtet ist und/oder dass die Bildverarbeitungsvorrichtung (4) zur Segmentierung (55) der Bilder (9, 10) in Bildsegmente eingerichtet ist.

5. 3D-Aufnahmevorrichtung (1) nach einem der Ansprüche 1 bis 4, **dadurch gekennzeichnet, dass** das Abstandsmessgerät (3) zur Veränderung einer Ausrichtung einer Messrichtung und/oder eines Messstrahls (52) eingerichtet ist.

6. 3D-Aufnahmevorrichtung (1) nach einem der Ansprüche 1 bis 5, **dadurch gekennzeichnet, dass** eine Ansteuerungseinheit (56) zur Ausrichtung der oder einer Messrichtung des Abstandsmessgeräts (3) derart, dass die gemessene Abstandsinformation (42) auf ein Bildsegment bezogen ist, ausgebildet ist.

7. 3D-Aufnahmevorrichtung (1) nach einem der Ansprüche 1 bis 6, **dadurch gekennzeichnet, dass** ein Bewegungs- und/oder Beschleunigungssensor (58) zur Detektion einer Bewegung der Bildaufnahmevorrichtung (2) eingerichtet ist und/oder dass die Bildverarbeitungsvorrichtung (4) zur Berechnung einer dreidimensionalen Darstellung der wenigstens einen Gruppe (29, 30, 31, 32) von zueinander korrespondierenden Bildbestandteilen (18, 19, 20, 21, 25, 26, 27, 28) an der wenigstens einen skalierten dreidimensionalen Positionsangabe eingerichtet ist.

8. 3D-Aufnahmevorrichtung (1) nach einem der Ansprüche 1 bis 7, **dadurch gekennzeichnet, dass** die Bildverarbeitungsvorrichtung (4) zur Einpassung eines geometrischen Objekts (51) in die wenigstens eine skalierte dreidimensionale Positionsangabe eingerichtet ist.

9. 3D-Aufnahmevorrichtung (1) nach einem der Ansprüche 1 bis 8, **dadurch gekennzeichnet, dass** die Bildverarbeitungsvorrichtung (4) zur Berechnung wenigstens einer Länge, eines Flächeninhalts und/oder eines Rauminhalts aus den vorzugsweise skalierten dreidimensionalen Positionsangaben eingerichtet ist und/oder dass die Ausgabeeinheit (5) zur grafischen Ausgabe der wenigstens einen Gruppe (29, 30, 31, 32) von zueinander korrespondierenden Bildbestandteilen (18, 19, 20, 21, 25, 26, 27, 28) an einem der vorzugsweise skalierten dreidimensionalen Positionsangabe (48, 49, 50) entsprechenden Bildpunkt eingerichtet ist.

10. Verfahren zur Erstellung eines 3D-Bildes, wobei mit einer Bildaufnahmevorrichtung (2) eine Folge (8) von wenigstens zwei Bildern (9, 10) einer Szene (11) aufgenommen wird und in den aufgenommenen Bildern (9, 10) wenigstens eine Gruppe (29, 30, 31, 32) zueinander korrespondierenden Bildbestandteilen (18, 19, 20, 21, 25, 26, 27, 28) identifiziert wird, in einer Bildverarbeitungsvorrichtung (4) wenigstens eine dreidimensionale Positionsangabe (50) zu der wenigstens einen Gruppe (29, 30, 31, 32) von zueinander korrespondierenden Bildbestandteilen (18, 19, 20, 21, 25, 26, 27, 28) berechnet wird, aus der jeweiligen Bildposition (59, 60) der Bildbestandteile (18, 19, 20, 21, 25, 26, 27, 28) aus der wenigstens einen Gruppe (29, 30, 31, 32) in den Bildern (9, 10) der Folge (8) wenigstens eine Aufnahmepose (15, 16, 17) der Bildaufnahmevorrichtung (2) zu einem Aufnahmezeitpunkt berechnet wird, mit einem Abstandsmessgerät (3) wenigstens eine Abstandsinformation (42) zu der Szene (11) gemessen wird und eine Skalierung (46) der dreidimensionalen Positionsangabe mittels der gemessenen Abstandsinformation (42) durchgeführt wird, wobei zu dreidimensionalen Positionsangaben der wenigstens einen Gruppe (29, 30, 31, 32) von zueinander korrespondierenden Bildbestandteilen (18, 19, 20, 21, 25, 26, 27, 28), denen keine gemessene Abstandsinformation (42) zuordenbar ist, weitere Abstandsinformation in einem Extra- oder Interpolationsverfahren (47) aus der gemessenen Abstandsinformation (42) und der dreidimensionalen Positionsangabe (48, 49, 50) berechnet werden, und wobei die Abstandsinformation (42) mit einem Messstrahl (52) gemessen wird, der in einem Spektralbereich liegt, in welchem die Bildaufnahmevorrichtung (2) aufnimmt..

11. Verfahren nach Anspruch 10, **dadurch gekennzeichnet, dass** vor oder nach der Skalierung weitere dreidimensionale Positionsangaben (48, 49) zu weiteren Bildbestandteilen berechnet werden.

12. Verfahren nach Anspruch 10 oder 11, **dadurch gekennzeichnet, dass** die weiteren dreidimensionalen Positionsangaben (48, 49) in einem Stereoverfahren berechnet werden und/oder dass die weiteren dreidimensionalen Positionsangaben (48, 49) aus einer mit einer Level-Set-Methode berechneten Grenzfläche abgeleitet werden.

13. Verfahren nach einem der Ansprüche 10 bis 12, **dadurch gekennzeichnet, dass** die wenigstens eine Gruppe (29, 30, 31, 32) von zueinander korrespondierenden Bildbestandteilen (18, 19, 20, 21, 25, 26, 27, 28) mittels Merkmalsanalyse (23) identifiziert wird und/oder dass die aufgenommenen Bilder (9, 10) mit der Bildverarbeitungsvorrichtung (4) segmentiert werden.

14. Verfahren nach einem der Ansprüche 10 bis 13, **dadurch gekennzeichnet, dass** die Abstandinformation (50) automatisch zu einem Szenebestandteil (34, 35, 36, 37) gemessen wird, der der wenigstens einen Gruppe (29, 30, 31, 32) von zueinander korrespondierenden Bildbestandteilen (18, 19, 20, 21, 25, 26, 27, 28) entspricht.

15. Verfahren nach einem der Ansprüche 10 bis 14, **dadurch gekennzeichnet, dass** die Skalierung (46) aus der der wenigstens einen Gruppe (29, 30, 31, 32) von zueinander korrespondierenden Bildbestandteilen (18, 19, 20, 21, 25, 26, 27, 28) zugeordneten Abstandsinformation (42) berechnet wird und/oder dass zu jedem Bildsegment der Bilder (9, 10) eine Abstandsinformation (42) gemessen wird.

16. Verfahren nach einem der Ansprüche 10 bis 15, **dadurch gekennzeichnet, dass** eine Bewegung der Bildaufnahmevorrichtung (2) zwischen zwei Einzelaufnahmen unter Verwendung eines Ausgangssignals eines Bewegungs- und/oder Beschleunigungssensors (58) berechnet wird.

17. Verfahren nach einem der Ansprüche 10 bis 16, **dadurch gekennzeichnet, dass** die wenigstens eine dreidimensionale Positionsangabe (48, 49, 50) mittels eines SLAM- und/oder Structure-from-Motion-Verfahrens berechnet wird und/oder dass eine dreidimensionale Darstellung der wenigstens einen Gruppe (29, 30, 31, 32) von zueinander korrespondierenden Bildbestandteilen (18, 19, 20, 21, 25, 26, 27, 28) an der wenigstens einen skalierten dreidimensionalen Positionsangabe berechnet wird.

18. Verfahren nach einem der Ansprüche 10 bis 17, **dadurch gekennzeichnet, dass** ein Raumbereich (59), in welchem weitere dreidimensionale Positionsangaben (48, 49) zu berechnen sind, identifiziert und das Abstandsmessgerät (3) so angesteuert wird, dass eine Abstandsinformation (42) für den Raumbereich (59) gemessen wird, und/oder dass zur Ansteuerung des Abstandsmessgeräts (3) eine aktuelle Aufnahmepose (17) aus zuvor berechneten Aufnahmeposen (15, 16) berechnet oder geschätzt wird.

19. Verfahren nach einem der Ansprüche 10 bis 18, **dadurch gekennzeichnet, dass** in die wenigstens eine dreidimensionale Positionsangabe (48, 49, 50) ein geometrisches Objekt (51) eingepasst wird.

20. Verfahren nach einem der Ansprüche 10 bis 19, **dadurch gekennzeichnet, dass** wenigstens eine Länge, ein Flächeninhalt und/oder ein Rauminhalt aus den vorzugsweise skalierten dreidimensionalen Positionsangaben berechnet wird/werden und/oder dass die wenigstens eine Gruppe (29, 30, 31, 32) mittels einer Ausgabeeinheit (5) an einem der wenigstens einen dreidimensionalen Positionsangabe (48, 49, 50) entsprechenden Bildpunkt ausgegeben wird.

21. Verfahren zur Einrichtung einer 3D-Aufnahmevorrichtung nach einem der Ansprüche 1 bis 9, **dadurch gekennzeichnet, dass** ein Abstandsmessgerät (3) mit einer Bildaufnahmevorrichtung (2) verbunden wird, dass eine Folge von wenigstens einem Bild (9, 10) einer Szene (11) aufgenommen wird, dass zu jedem Bild (9, 10) wenigstens eine Abstandsinformation (42) gemessen wird, dass zu jeder gemessenen Abstandsinformation (42) eine Bildposition in dem zugehörigen Bild (9, 10) bestimmt wird, auf die diese Abstandinformation (42) bezogen ist, und dass aus den gemessenen Abstandsinformationen (42) und den bestimmten Bildpositionen wenigstens ein Parameter berechnet wird, der eine Ausrichtung des Abstandsmessgeräts (3) relativ zu der Bildaufnahmevorrichtung (2) beschreibt.

22. Verfahren nach Anspruch 21, **dadurch gekennzeichnet, dass** die bekannte und/oder künstlich erzeugte Szene mit einem Messtrahl (52) des Abstandsmessgeräts (3) projiziert wird.

## Claims

1. 3D recording device (1) comprising an image-recording device (2), a rangefinder (3) and an image-processing device (4), wherein the image-processing device (4) is configured to identify (33) at least one group (29, 30, 31, 32) of mutually corresponding image constituents (18, 19, 20, 21, 25, 26, 27, 28) in a sequence (8) of at least two images (9, 10) recorded by the image-recording device (2), the image-processing device (4) is configured to calculate (38) at least one three-dimensional position specification (50) in relation to the at least one group (29, 30, 31, 32) of the mutually corresponding image constituents (18, 19, 20, 21, 25, 26, 27, 28) from a respective image position (59, 60) of the image constituents (18, 19, 20, 21, 25, 26, 27, 28) from the group (29, 30, 31, 32) in the images (9, 10) of the sequence (8), wherein the image-processing device (4) is configured to calculate (38) a recording pose of the image-recording device (2) from the respective image positions (59, 60) of the image constituents (18, 19, 20, 21, 25, 26, 27, 28) of the at least one group (29, 30, 31, 32), and the image-processing device (4) is configured to scale (46) the calculated at least one three-dimensional position specification (50) by means of distance information (42) measured by the rangefinder (3), wherein the image-processing device (4) is configured to calculate further items of distance information in an extrapolation and/or interpolation method (47) for three-dimensional position specifications which are associated with the at least one group (29, 30, 31, 32) of mutually corresponding image constituents (18, 19, 20, 21, 25, 26, 27, 28) and which cannot be assigned to measured distance information (42) from the measured distance information (42) and the three-dimensional position specification (50), and wherein the rangefinder (3) is embodied to generate a measurement beam (52) in a spectral range detectable by the image-recording device (2).

2. 3D recording device (1) according to Claim 1, **characterized in that** an output unit (5) is embodied to output the at least one scaled three-dimensional position specification and/or **in that** the rangefinder (3) is embodied as a laser rangefinder.

3. 3D recording device (1) according to Claim 1 or 2, **characterized in that** the image-processing device is configured to calculate further three-dimensional position specifications (48, 49) from the calculated three-dimensional position specifications (50) and recording poses (15, 16, 17), in particular in a stereo method and/or from an interface calculated by a level set method.

4. 3D recording device (1) according to one of Claims 1 to 3, **characterized in that** the image-processing device (4) is configured to identify (33) the at least one group (29, 30, 31, 32) of mutually corresponding image constituents (18, 19, 20, 21, 25, 26, 27, 28) by means of a feature analysis (23) and/or **in that** the image-processing device (4) is configured to segment (55) the images (9, 10) into image segments.

5. 3D recording device (1) according to one of Claims 1 to 4, **characterized in that** the rangefinder (3) is configured to modify an alignment of a measurement direction and/or of a measurement beam (52).

6. 3D recording device (1) according to one of Claims 1 to 5, **characterized in that** an actuation unit (56) is embodied to align the, or a, measurement direction of the rangefinder (3) in such a way that the measured distance information (42) is related to an image segment.

7. 3D recording device (1) according to one of Claims 1 to 6, **characterized in that** a movement and/or acceleration sensor (58) is configured to detect a movement of the image-recording device (2) and/or **in that** the image-processing device (4) is configured to calculate a three-dimensional representation of the at least one group (29, 30, 31, 32) of mutually corresponding image constituents (18, 19, 20, 21, 25, 26, 27, 28) at the at least one scaled three-dimensional position specification.

8. 3D recording device (1) according to one of Claims 1 to 7, **characterized in that** the image-processing device (4) is configured to fit a geometric object (51) into the at least one scaled three-dimensional position specification.

9. 3D recording device (1) according to one of Claims 1 to 8, **characterized in that** the image-processing device (4) is configured to calculate at least one length, area and/or volume from the preferably scaled three-dimensional position specifications and/or **in that** the output unit (5) is configured to graphically output the at least one group (29, 30, 31, 32) of mutually corresponding image constituents (18, 19, 20, 21, 25, 26, 27, 28) at an image point corresponding to the preferably scaled three-dimensional position specification (48, 49, 50) .

10. Method for producing a 3D image, wherein a sequence (8) of at least two images (9, 10) of a scene (11) is recorded by means of an image-recording device (2) and at least one group (29, 30, 31, 32) of mutually corresponding image constituents (18, 19, 20, 21, 25, 26, 27, 28) is identified in the recorded images (9, 10), at least one three-dimensional position specification (50) relating to the at least one group (29, 30, 31, 32) of mutually corresponding image constituents (18, 19, 20, 21, 25, 26, 27, 28) is calculated in an image-processing device (4), at least one recording pose (15, 16, 17) of the image-recording device (2) at a recording time is calculated from the respective image position (59, 60) of the image constituents (18, 19, 20, 21, 25, 26, 27, 28) from the at least one group (29, 30, 31, 32) in the images (9, 10) of the sequence (8), at least one item of distance information (42) in relation to the scene (11) is measured by a rangefinder (3) and scaling (46) of the three-dimensional position specification is performed by means of the measured distance information (42), wherein further items of distance information are calculated in an extrapolation and/or interpolation method (47) for three-dimensional position specifications of the at least one group (29, 30, 31, 32) of mutually corresponding image constituents (18, 19, 20, 21, 25, 26, 27, 28) which cannot be assigned to measured distance information (42) from the measured distance information (42) and the three-dimensional position specification (50), and wherein the distance information (42) is measured by a measurement beam (52), which lies in a spectral range in which the image-recording device (2) records.

11. Method according to Claim 10, **characterized in that** further three-dimensional position specifications (48, 49) in relation to further image constituents are calculated before or after the scaling.

12. Method according to Claim 10 or 11, **characterized in that** the further three-dimensional position specifications (48, 49) are calculated in a stereo method and/or **in that** the further three-dimensional position specifications (48, 49) are derived from an interface calculated using a level set method.

13. Method according to one of Claims 10 to 12, **characterized in that** the at least one group (29, 30, 31, 32) of mutually corresponding image constituents (18, 19, 20, 21, 25, 26, 27, 28) is identified by means of a feature analysis (23) and/or **in that** the recorded images (9, 10) are segmented by the image-processing device (4).

14. Method according to one of Claims 10 to 13, **characterized in that** the distance information (50) in relation to a scene constituent (34, 35, 36, 37), which corresponds to the at least one group (29, 30, 31, 32) of mutually corresponding image constituents (18, 19, 20, 21, 25, 26, 27, 28), is measured automatically.

15. Method according to one of Claims 10 to 14, **characterized in that** the scaling (46) is calculated from the distance information (42) associated with the at least one group (29, 30, 31, 32) of mutually corresponding image constituents (18, 19, 20, 21, 25, 26, 27, 28) and/or **in that** distance information (42) is measured in relation to each image segment of the images (9, 10) .

16. Method according to one of Claims 10 to 15, **characterized in that** the movement of the image-recording device (2) between two individual recordings is calculated using an output signal of a movement and/or acceleration sensor (58).

17. Method according to one of Claims 10 to 16, **characterized in that** the at least one three-dimensional position specification (48, 49, 50) is calculated by means of a SLAM method and/or structure-from-motion method and/or **in that** a three-dimensional representation of the at least one group (29, 30, 31, 32) of mutually corresponding image constituents (18, 19, 20, 21, 25, 26, 27, 28) is calculated at the at least one scaled three-dimensional position specification.

18. Method according to one of Claims 10 to 17, **characterized in that** a spatial region (59), in which further three-dimensional position specifications (48, 49) are to be calculated, is identified and the rangefinder (3) is actuated in such a way that distance information (42) for the spatial region (59) is measured and/or **in that** a current recording pose (17) is calculated or estimated from previously calculated recording poses (15, 16) for the purposes of actuating the rangefinder (3).

19. Method according to one of Claims 10 to 18, **characterized in that** a geometric object (51) is fit into the at least one three-dimensional position specification (48, 49, 50) .

20. Method according to one of Claims 10 to 19, **characterized in that** at least one length, area and/or volume is/are calculated from the preferably scaled three-dimensional position specifications and/or **in that** the at least one group (29, 30, 31, 32) is output at an image point corresponding to the at least one three-dimensional position specification (48, 49, 50) by means of an output unit (5).

21. Method for setting up a 3D recording device according to one of Claims 1 to 9, **characterized in that** a rangefinder (3) is connected to an image-recording device (2), **in that** a sequence of at least one image (9, 10) of a scene (11) is recorded, **in that** at least one item of distance information (42) is measured for each image (9, 10), **in that** an image position in the associated image (9, 10) is determined for each item of measured distance information (42), to which image position this distance information (42) relates, and **in that** at least one parameter is calculated from the measured distance information (42) and the determined image positions, which parameter describes an alignment of the rangefinder (3) relative to the image-recording device (2).

22. Method according to Claim 21, **characterized in that** the known and/or artificially generated scene is projected with a measurement beam (52) of the rangefinder (3) .

## Revendications

1. Dispositif de prises de vues 3D (1) avec un dispositif de prise d'image (2), un appareil de mesure de distance (3) et un dispositif de traitement d'image (4), dans lequel le dispositif de traitement d'image (4) est conçu pour l'identification (33) d'au moins un groupe (29, 30, 31, 32) de composants d'image se correspondant mutuellement (18, 19, 20, 21, 25, 26, 27, 28) dans une succession (8) d'au moins deux images (9, 10) prises avec le dispositif de prise d'image (2), le dispositif de traitement d'image (4) est conçu pour le calcul (38) d'au moins une indication de position tridimensionnelle (50) par rapport audit au moins un groupe (29, 30, 31, 32) de composants d'image se correspondant mutuellement (18, 19, 20, 21, 25, 26, 27, 28) à partir d'une position d'image respective (59, 60) des composants d'image (18, 19, 20, 21, 25, 26, 27, 28) du groupe (29, 30, 31, 32) dans les images (9, 10) de la succession (8), dans lequel le dispositif de traitement d'image (4) est conçu pour le calcul (38) d'une pose de prise du dispositif de prise d'image (2) à partir des positions d'image respectives (59, 60) des composants d'image (18, 19, 20, 21, 25, 26, 27, 28) dudit au moins un groupe (29, 30, 31, 32), et le dispositif de traitement d'image (4) est conçu pour la mise à l'échelle (46) de ladite au moins une indication de position calculée tridimensionnelle (50) au moyen d'une information de distance (42) mesurée avec l'appareil de mesure de distance (3), dans lequel le dispositif de traitement d'image (4) est conçu pour le calcul d'autres informations de distance par rapport audit au moins un groupe (29, 30, 31, 32) d'indications de position tridimensionnelles associées à des composants d'image se correspondant mutuellement (18, 19, 20, 21, 25, 26, 27, 28), auxquelles aucune information de distance (42) mesurée ne peut être associée, dans un procédé d'extra- et/ou d'interpolation (47) et de l'indication de position tridimensionnelle (50), et dans lequel l'appareil de mesure de distance (3) est configuré pour produire un faisceau de mesure (52) dans un domaine spectral détectable par le dispositif de prise d'image (2).

2. Dispositif de prises de vues 3D (1) selon la revendication 1, **caractérisé en ce qu'**une unité de sortie (5) est conçue pour produire ladite au moins une indication de position tridimensionnelle mise à l'échelle et/ou **en ce que** l'appareil de mesure de distance (3) est constitué par un télémètre à laser.

3. Dispositif de prises de vues 3D (1) selon la revendication 1 ou 2, **caractérisé en ce que** le dispositif de traitement d'image est conçu pour le calcul d'autres indications de position tridimensionnelles (48, 49) à partir des indications de position tridimensionnelles calculées (50) et des poses de prise calculées (15, 16, 17), en particulier dans un procédé stéréo et/ou à partir d'une surface limite calculée avec une méthode des surfaces de niveau.

4. Dispositif de prises de vues 3D (1) selon l'une quelconque des revendications 1 à 3, **caractérisé en ce que** le dispositif de traitement d'image (4) est conçu pour l'identification (33) dudit au moins un groupe (29, 30, 31, 32) de composants d'image se correspondant mutuellement (18, 19, 20, 21, 25, 26, 27, 28) au moyen d'une analyse des caractéristiques (23) et/ou **en ce que** le dispositif de traitement d'image (4) est conçu pour la segmentation (55) des images (9, 10) en segments d'image.

5. Dispositif de prises de vues 3D (1) selon l'une quelconque des revendications 1 à 4, **caractérisé en ce que** le dispositif de mesure de distance (3) est conçu pour changer une orientation d'une direction de mesure et/ou d'un faisceau de mesure (52).

6. Dispositif de prises de vues 3D (1) selon l'une quelconque des revendications 1 à 5, **caractérisé en ce qu'**une unité de commande (56) est configurée pour orienter la ou une direction de mesure de l'appareil de mesure de distance (3) de telle manière que l'information de distance mesurée (42) soit rapportée à un segment d'image.

7. Dispositif de prises de vues 3D (1) selon l'une quelconque des revendications 1 à 6, **caractérisé en ce qu'**un détecteur de mouvement et/ou d'accélération (58) est conçu pour la détection d'un mouvement du dispositif de prise d'image (2) et/ou **en ce que** le dispositif de traitement d'image (4) est conçu pour le calcul d'une représentation tridimensionnelle dudit au moins un groupe (29, 30, 31, 32) de composants d'image se correspondant mutuellement (18, 19, 20, 21, 25, 26, 27, 28) à ladite au moins une indication de position tridimensionnelle mise à l'échelle.

8. Dispositif de prises de vues 3D (1) selon l'une quelconque des revendications 1 à 7, **caractérisé en ce que** le dispositif de traitement d'image (4) est conçu pour l'insertion d'un objet géométrique (51) dans ladite au moins une indication de position tridimensionnelle mise à l'échelle.

9. Dispositif de prises de vues 3D (1) selon l'une quelconque des revendications 1 à 8, **caractérisé en ce que** le dispositif de traitement d'image (4) est conçu pour le calcul d'au moins une longueur, une valeur de surface et/ou une valeur de volume à partir des indications de position tridimensionnelles de préférence mises à l'échelle et/ou **en ce que** l'unité de sortie (5) est conçue pour la sortie graphique dudit au moins un groupe (29, 30, 31, 32) de composants d'image se correspondant mutuellement (18, 19, 20, 21, 25, 26, 27, 28) en un point d'image correspondant à l'indication de position tridimensionnelle de préférence mise à l'échelle (48, 49, 50).

10. Procédé pour réaliser une image 3D, dans lequel on enregistre avec un dispositif de prise d'image (2) une succession (8) d'au moins deux images (9, 10) d'une scène (11) et on identifie dans les images enregistrées (9, 10) au moins un groupe (29, 30, 31, 32) de composants d'image se correspondant mutuellement (18, 19, 20, 21, 25, 26, 27, 28), on calcule dans un dispositif de traitement d'image (4) au moins une indication de position tridimensionnelle (50) pour ledit au moins un groupe (29, 30, 31, 32) de composants d'image se correspondant mutuellement (18, 19, 20, 21, 25, 26, 27, 28), on calcule à partir de la position d'image respective (59, 60) des composants d'image (18, 19, 20, 21, 25, 26, 27, 28) dudit au moins un groupe (29, 30, 31, 32) dans les images (9, 10) de la succession (8) au moins une pose de prise (15, 16, 17) du dispositif de prise d'image (2) à un instant de prise, on mesure avec un appareil de mesure de distance (3) au moins une information de distance (42) jusqu'à la scène (11) et on effectue une mise à l'échelle (46) de l'indication de position tridimensionnelle au moyen de l'information de distance mesurée (42), dans lequel on calcule, pour des indications de position tridimensionnelles dudit au moins un groupe (29, 30, 31, 32) de composants d'image se correspondant mutuellement (18, 19, 20, 21, 25, 26, 27, 28), auxquelles aucune information de distance mesurée (42) ne peut être associée, d'autres informations de distance par un procédé d'extrapolation ou d'interpolation (47) à partir de l'information de distance mesurée (42) et de l'indication de position tridimensionnelle (48, 49, 50), et dans lequel on mesure l'information de distance (42) avec un faisceau de mesure (52), qui se situe dans le domaine spectral dans lequel le dispositif de prise d'image (2) enregistre.

11. Procédé selon la revendication 10, **caractérisé en ce que** l'on calcule, avant ou après la mise à l'échelle, d'autres indications de position tridimensionnelles (48, 49) pour d'autres composants d'image.

12. Procédé selon la revendication 10 ou 11, **caractérisé en ce que** l'on calcule les autres indications de position tridimensionnelles (48, 49) par un procédé stéréo et/ou **en ce que** l'on déduit les autres indications de position tridimensionnelles (48, 49) d'une surface limite calculée par la méthode des surfaces de niveau.

13. Procédé selon l'une quelconque des revendications 10 à 12, **caractérisé en ce que** l'on identifie ledit au moins un groupe (29, 30, 31, 32) de composants d'image se correspondant mutuellement (18, 19, 20, 21, 25, 26, 27, 28) au moyen d'une analyse des caractéristiques (23) et/ou **en ce que** l'on segmente les images enregistrées (9, 10) avec le dispositif de traitement d'image (4).

14. Procédé selon l'une quelconque des revendications 10 à 13, **caractérisé en ce que** l'on mesure l'information de distance (50) automatiquement pour un composant de scène (34, 35, 36, 37), qui correspond audit au moins un groupe (29, 30, 31, 32) de composants d'image se correspondant mutuellement (18, 19, 20, 21, 25, 26, 27, 28).

15. Procédé selon l'une quelconque des revendications 10 à 14, **caractérisé en ce que** l'on calcule la mise à l'échelle (46) à partir de l'information de distance (42) associée audit au moins un groupe (29, 30, 31, 32) de composants d'image se correspondant mutuellement (18, 19, 20, 21, 25, 26, 27, 28) et/ou **en ce que** l'on mesure une information de distance (42) pour chaque segment d'image des images (9, 10).

16. Procédé selon l'une quelconque des revendications 10 à 15, **caractérisé en ce que** l'on calcule un mouvement du dispositif de prise d'image (2) entre deux prises instantanées en utilisant un signal de sortie d'un détecteur de mouvement et/ou d'accélération (58).

17. Procédé selon l'une quelconque des revendications 10 à 16, **caractérisé en ce que** l'on calcule ladite au moins une indication de position tridimensionnelle (48, 49, 50) au moyen d'un procédé SLAM et/ou de structure à partir du mouvement et/ou **en ce que** l'on calcule une représentation tridimensionnelle dudit au moins un groupe (29, 30, 31, 32) de composants d'image se correspondant mutuellement (18, 19, 20, 21, 25, 26, 27, 28) à ladite au moins une indication de position tridimensionnelle mise à l'échelle.

18. Procédé selon l'une quelconque des revendications 10 à 17, **caractérisé en ce que** l'on identifie un domaine de l'espace (59), dans lequel d'autres indications de position tridimensionnelles (48, 49) doivent être calculées, et on commande l'appareil de mesure de distance (3), de telle manière que l'on mesure une information de distance (42) pour le domaine de l'espace (59), et/ou **en ce que** l'on calcule ou on évalue, pour la commande de l'appareil de mesure de distance (3), une pose de prise actuelle (17) à partir de poses de prise préalablement calculées (15, 16).

19. Procédé selon l'une quelconque des revendications 10 à 18, **caractérisé en ce que** l'on insère un objet géométrique (51) dans ladite au moins une indication de position tridimensionnelle (48, 49, 50).

20. Procédé selon l'une quelconque des revendications 10 à 19, **caractérisé en ce que** l'on calcule au moins une longueur, une valeur de surface et/ou une valeur de volume à partir des indications de position tridimensionnelles de préférence mises à l'échelle et/ou **en ce que** l'on produit ledit au moins un groupe (29, 30, 31, 32) au moyen d'une unité de sortie (5) en un point d'image correspondant à ladite au moins une indication de position tridimensionnelle (48, 49, 50).

21. Procédé pour aménager un dispositif de prises de vues 3D selon l'une quelconque des revendications 1 à 9, **caractérisé en ce que** l'on relie un appareil de mesure de distance (3) à un dispositif de prise d'image (2), **en ce que** l'on enregistre une succession d'au moins une image (9, 10) d'une scène (11), **en ce que** l'on mesure pour chaque image (9, 10) au moins une information de distance (42), **en ce que** l'on détermine pour chaque information de distance mesurée (42) une position d'image dans l'image correspondante (9, 10) à laquelle cette information de distance se rapporte, et **en ce que** l'on calcule à partir des informations de distance mesurées (42) et des positions d'image déterminées au moins un paramètre, qui décrit une orientation de l'appareil de mesure de distance (3) par rapport au dispositif de prise d'image (2).

22. Procédé selon la revendication 21, **caractérisé en ce que** l'on projette la scène connue et/ou reproduite artificiellement avec un faisceau de mesure (52) de l'appareil de mesure de distance (3).
